# EUROPEAN PATENT SPECIFICATION

(11) **EP 4 285 316 B1**
(45) Date of publication and mention of the grant of the patent: **24.06.2026**
(21) Application number: 21938113.4
(22) Date of filing: 13.08.2021
(51) Int. Cl.: G06T 7/00, G06T 7/13, G06T 5/00, G06T 5/20, G03F 7/20, G06T 5/73

(54) **EDGE PROFILE INSPECTION FOR DELAMINATION DEFECTS**
KANTENPROFILINSPEKTION FÜR DELAMINATIONSDEFEKTE
INSPECTION DE PROFIL DE BORD À LA RECHERCHE DE DÉFAUTS DE DÉLAMINAGE

(30) Priority: 19.04.2021 IN 202141017914
(43) Date of publication of application: 06.12.2023
(73) Proprietor: KLA Corporation, Milpitas, California 95035 (US)
(72) Inventor: MUTHUKRISHNAN, Sankar, Chennai, 600102 (IN); DESHPANDE, Varadendra, Chennai, 600096 (IN); KARUTURI, Ramdas, Singapore 541305 (SG); PERALI, Pavan Kumar, San Ramon, California 94582 (US)
(74) Representative: FRKelly
(86) International application number: PCT/US2021/045836
(87) International publication number: WO 2022/225545

(56) References cited:
- EP-B1- 3 089 202
- WO-A2-2005/008170
- KR-B1- 101 304 088
- US-A1- 2018 342 051
- US-B1- 6 282 309
- US-B2- 10 540 759
- US-B2- 7 767 470
- US-B2- 8 090 190
- US-B2- 8 629 902
- US-B2- 9 123 504

## Description

### FIELD OF THE DISCLOSURE

This disclosure relates to semiconductor inspection.

### BACKGROUND OF THE DISCLOSURE

Evolution of the semiconductor manufacturing industry is placing greater demands on yield management and, in particular, on metrology and inspection systems. Critical dimensions continue to shrink, yet the industry needs to decrease time for achieving high-yield, high-value production. Minimizing the total time from detecting a yield problem to fixing it maximizes the return-on-investment for a semiconductor manufacturer.

Fabricating semiconductor devices, such as logic and memory devices, typically includes processing a semiconductor wafer using a large number of fabrication processes to form various features and multiple levels of the semiconductor devices. For example, lithography is a semiconductor fabrication process that involves transferring a pattern from a reticle to a photoresist arranged on a semiconductor wafer. Additional examples of semiconductor fabrication processes include, but are not limited to, chemical-mechanical polishing (CMP), etching, deposition, and ion implantation. An arrangement of multiple semiconductor devices fabricated on a single semiconductor wafer may be separated into individual semiconductor devices.

Bonded (or stacked) wafers are frequently used in the semiconductor industry. One or more ultrathin wafers bonded to a carrier wafer is an example of a bonded wafer, though other semiconductor wafer designs also can be bonded wafers. For example, a bonded wafer can include a top wafer (e.g., a device wafer) bonded to a carrier wafer. These bonded wafers can be used for both memory and logic applications. Three-dimensional integrated circuits (3D IC) can be produced using bonded wafers.

Bonded wafers can have complex edge profiles. The various layers of a bonded wafer can have different heights and diameters. These dimensions can be affected by the size of the various wafers prior to stacking or by processing steps.

Previously, edge profile images of bonded wafers were reviewed manually. This is cumbersome, slow, and prone to user error. The images used for manual review also can have reduced sensitivity.

WO2005/008170 discloses an edge inspection method for detecting detects on a wafer surface.

EP3089202 describes a method and apparatus for analyzing shape of wafer.

US8090190 discloses a method and apparatus for reviewing defects.

US10540759 describes bonded wafer metrology.

US6282309 discloses enhanced sensitivity automated photomask inspection system.

Improved techniques for inspecting edge profiles are needed.

### BRIEF SUMMARY OF THE DISCLOSURE

A method as recited in claim 1 is provided in a first embodiment.

A non-transitory computer readable medium as recited in claim 6 storing a program can be configured to instruct a processor to execute the method of the first embodiment.

A system as recited in claim 7 is provided in a second embodiment.

### DESCRIPTION OF THE DRAWINGS

For a fuller understanding of the nature and objects of the disclosure, reference should be made to the following detailed description taken in conjunction with the accompanying drawings, in which:
FIG. 1 is a flowchart of a method according to the present disclosure;
FIGS. 2 and 3 are exemplary profiler images of wafers with delamination defects;
FIGS. 4A-4D show exemplary images during the process of determining a defect-free profile edge;
FIGS. 5A-5C show exemplary images during the process of removing defects;
FIGS. 6A-6D show exemplary images during the process of generating a reference image;
FIGS. 7A-7D show examples of delamination detection using the embodiments disclosed herein;
FIGS. 8 and 9 are a top view and corresponding cross-sectional side view along A-A of a block diagram of a system; and
FIG. 10 is a perspective view of the system corresponding to the embodiment of FIGS. 14-15.

### DETAILED DESCRIPTION OF THE DISCLOSURE

Although claimed subject matter will be described in terms of certain embodiments, other embodiments, including embodiments that do not provide all of the benefits and features set forth herein, are also within the scope of this disclosure. Various structural, logical, process step, and electronic changes may be made without departing from the scope of the disclosure. Accordingly, the scope of the disclosure is defined only by reference to the appended claims.

Embodiments disclosed herein can be used to detect delamination (e.g., peel-offs) near wafer edges using a silhouette image of the edge profile. Profile shapes for stacked or bonded wafers can vary across the wafer. Due to this shape variation, aligning and subtracting two profile images can be nuisance-prone. Consequently, an image is used to estimate a reference image. This reduces nuisance.

In an example, wafer edge profile images are collected during a job run. For example, wafer edge profile images are collected for up to 180 sites, though more or fewer images can be collected. The number of images can be based on memory limits, but it may be helpful to increase the number of images for certain wafers. Multiple calibrations can be applied to the images during preprocessing. Edge maps can be extracted from these calibrated images. A defect-free edge map can be estimated from the true edge map. From this defect-free edge map, a reference image can be estimated. The difference between the calibrated image and the reference image can be determined and then binarized. Finally, post-processing such as filtering and merging on the candidate defective pixels in the binary image can provide the defect information for all sites.

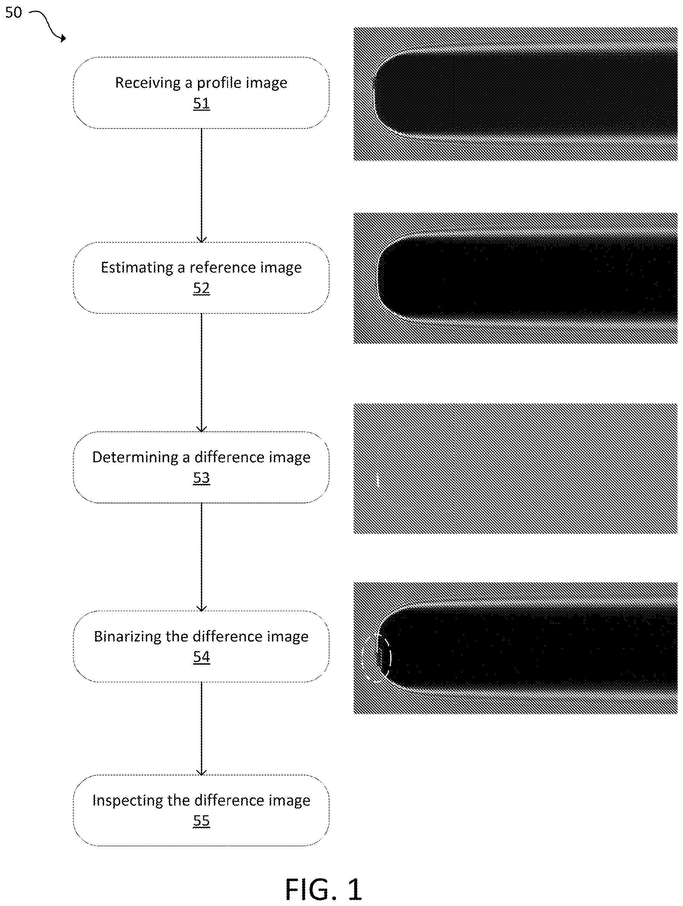

FIG. 1 is a flowchart of a method 50. Some or all the steps of the method 50 can use a processor.

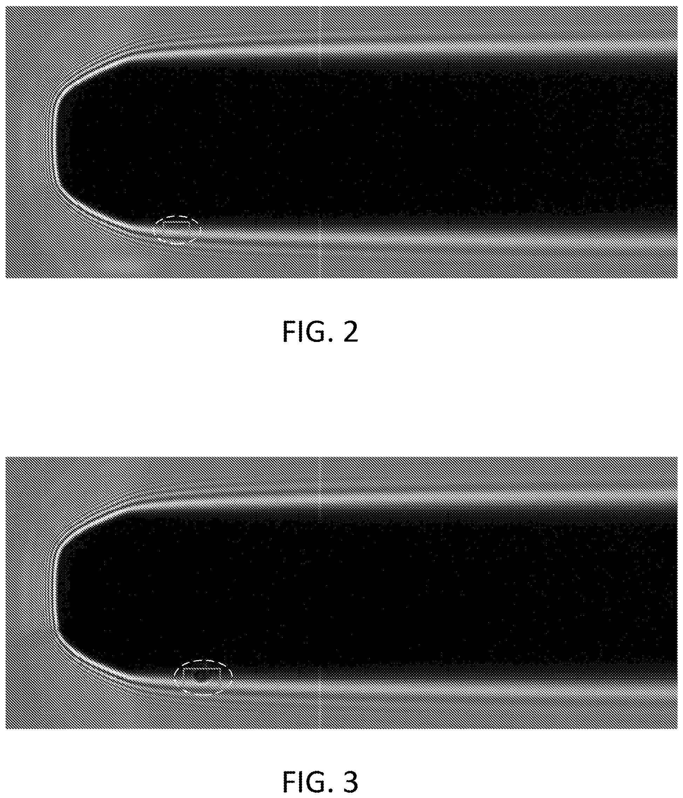

A profile image of an edge of a semiconductor wafer is received at 51. This can be a raw profile image. An exemplary profile image is shown to the right of step 51. Additional examples of images with delamination defects are shown in FIGS. 2 and 3. The delamination defects are highlighted in FIGS. 2 and 3 using boxes inside the dashed-line oval.

In an instance, the profile image is preprocessed before subsequently estimating the reference image at step 52. The preprocessing can include flipping the profile image. Images may be collected upside-down, so flipping the image can correct the image. Other preprocessing can include calibrating the raw image, such as performing dead pixel correction, distortion analysis, and/or laser beam path correction.

A reference image is estimated from the profile image at 52. An example of the reference image is shown to the right of step 52.

Estimating a reference image at step 52 can include determining a defect-free profile edge and generating the reference image using the defect-free profile edge. The estimating can occur on-the-fly. The reference image can compensate for profile changes between wafers or parts of the same wafer.

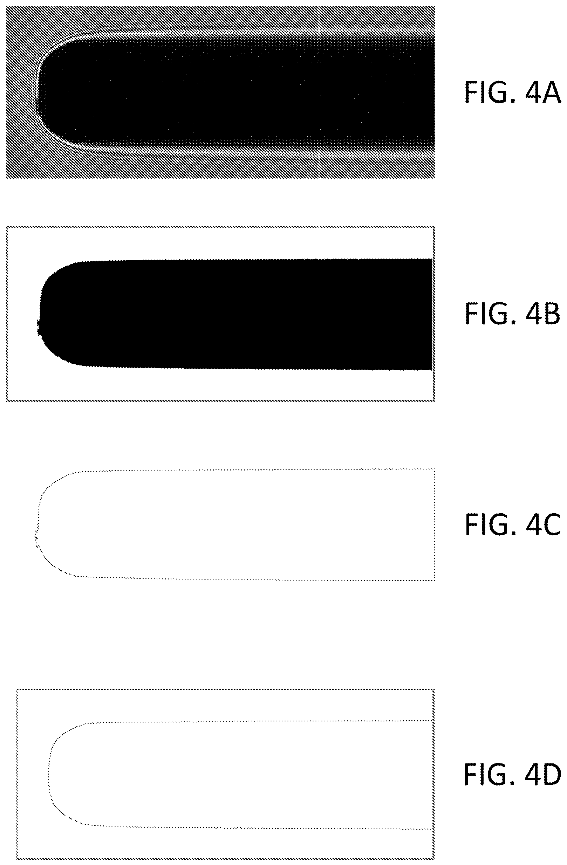

In an instance, determining the defect-free profile edge in step 52 includes binarizing the profile image; removing fringes from the profile image; extracting edges of the profile image to generate an edge image; and removing defects in the edge image. Fringes can occur because of diffraction at the edges of the wafer. These fringes interfere with inspection or measurement, so fringes may be removed before proceeding with the detection. Edge extraction can find the boundaries of the wafer. FIG. 4A shows an exemplary calibrated profile image. FIG. 4B shows the image of FIG. 4A after it is binarized and fringes are removed. Binarizing can convert the image to black and white from greyscale. A binary image from image can be created by replacing all values above a globally determined threshold with 1 and others with 0. FIG. 4C shows the image of FIG. 4B after edges are extracted. FIG. 4D, which is an edge image, shows the image of FIG. 4C after defects are removed. The defects on the outer edge of the wafer in the lower left of FIG. 4C were removed to form a smooth profile in FIG. 4D.

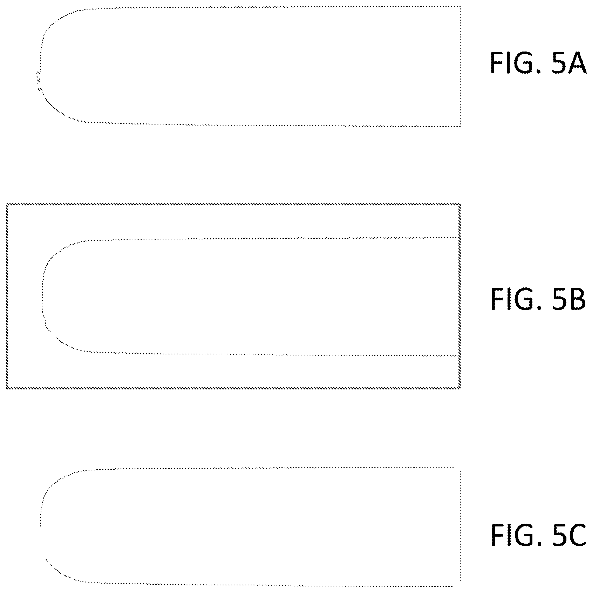

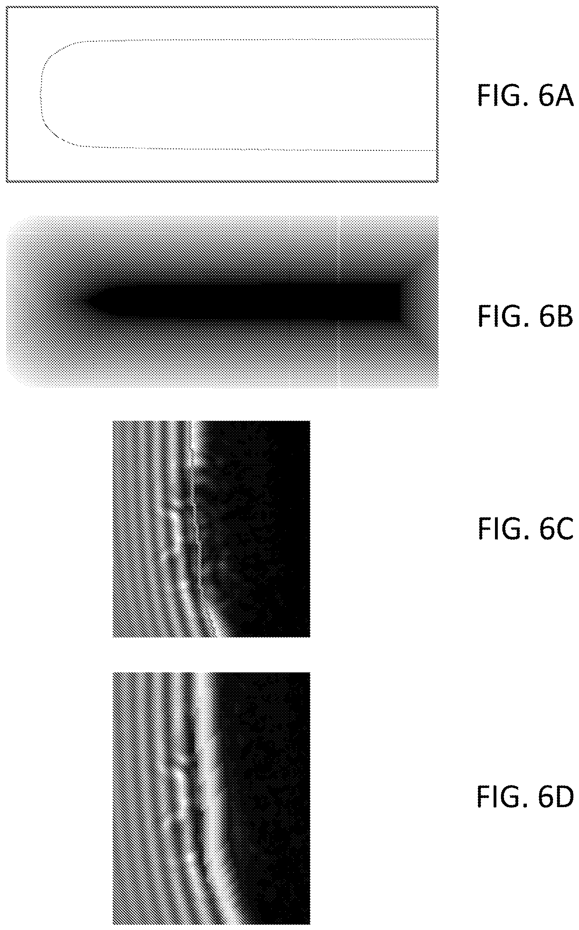

Removing the defects in the edge image can include receiving the edge image; estimating an edge in the edge image using a piecewise polynomial fit thereby generating an estimated edge image; and removing mismatched points between the edge image and the estimated edge image thereby generating the defect-free profile edge. A true edge image can have defects. Estimating a defect-free edge image from the true edge image can be used in this method. By comparing these two images, the defective region can be identified. FIG. 5A is the true edge image and FIG. 6 A is the estimated edge image. Comparing these two images allows defect to be located.

Estimating the edge and removing the mismatched points can be repeated until the mismatched points are removed. FIG. 5A shows a true edge image, which matches that of FIG. 4C. FIG. 5B shows the image of FIG. 5A after the piecewise polynomial fit. FIG. 5C shows the image of FIG. 5B after the mismatched points are identified and removed. The image of FIG. 5C is similar to the image in FIG. 4D. The break in FIG. 5C denotes that those pixels do not follow the piecewise polynomial fit in the true edge image. The algorithm highlights a discrepancy in those pixel regions, removes them, estimates those pixels, and fills the pixels in.

In an instance, mismatched points can be identified and removed between the true edge image (FIG. 5A) and the estimated edge image (FIG. 5B). For every estimated edge point, the system can try to look for closest edge point in the true image. If it is not found, these are identified as mismatched points. This process can be repeated until there is no mismatch or until a maximum iteration. The estimated edge image can then be outputted.

Generating the reference image in step 52 can include receiving the defect-free profile edge; applying a distance transform to the defect-free profile edge thereby generating a distance transform image; extracting pixels from the profile image that are a distance beyond an edge of the distance transform image thereby generating an extracted track; and applying a one-dimensional average filter on the extracted track. Extracting the pixels and applying the one-dimensional average filter can be repeated until the distance is less than a threshold. The threshold can indicate how far the system needs to go away from the profile edge. This threshold may be within a first fringe in an instance, so the threshold may be a fixed number.

Given a binary image, a distance transform can output another image wherein the intensity of a given pixel would be the closest non-zero pixel in binary images. From the distance transform, the closest non-zero pixel in the binary image can be found for every pixel. The pixels that are far away by a distance d from the profile edge are then extracted. The distance d can range from zero to a value. The one-dimensional average filter provides an intensity estimate of a particular pixel. In an instance, a mean value around that particular pixel is taken.

FIG. 6A is an exemplary defect-free profile edge, which corresponds to FIG. 4D. FIG. 6B is an exemplary distance transform image after the distance transform is applied to the image in FIG. 6B. This provides the closest edge point for every pixel. All pixels beyond a distance (track) from the edge can be extracted from the edge using the distance transform image. For example, FIG. 6C shows pixels at a 5-pixel distance from the edge. A one-dimensional average filter can be applied on the extracted track. This process can be repeated until the distance (track) is less than a maximum distance. FIG. 6D shows an estimated reference image after filtering one track at a time. The black points may not be considered because of the averaging. FIG. 6D shows a side region.

Turning back to FIG. 1, a difference image is determined between the reference image and the profile image at 53. An example of a difference image is shown to the right of step 53.

The difference image is binarized at 54. An example of a binarized difference image is shown to the right of step 54. The defect is highlighted in a box inside the dashed-line oval.

The difference image is inspected for defects after the binarizing at 55. Defects can be determined. For example, a defect is highlighted in the binarized difference image shown to the right of step 54.

The method 50 can be performed one or more times on a wafer.

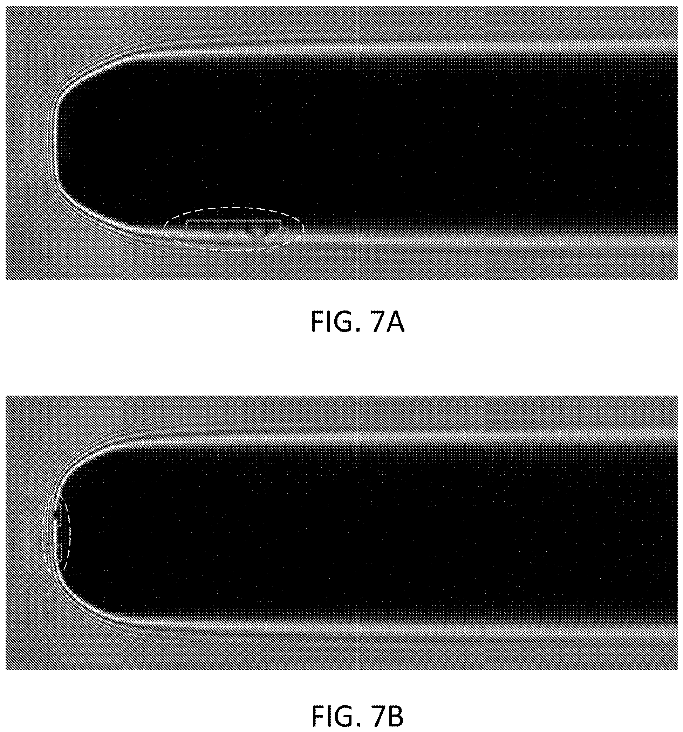

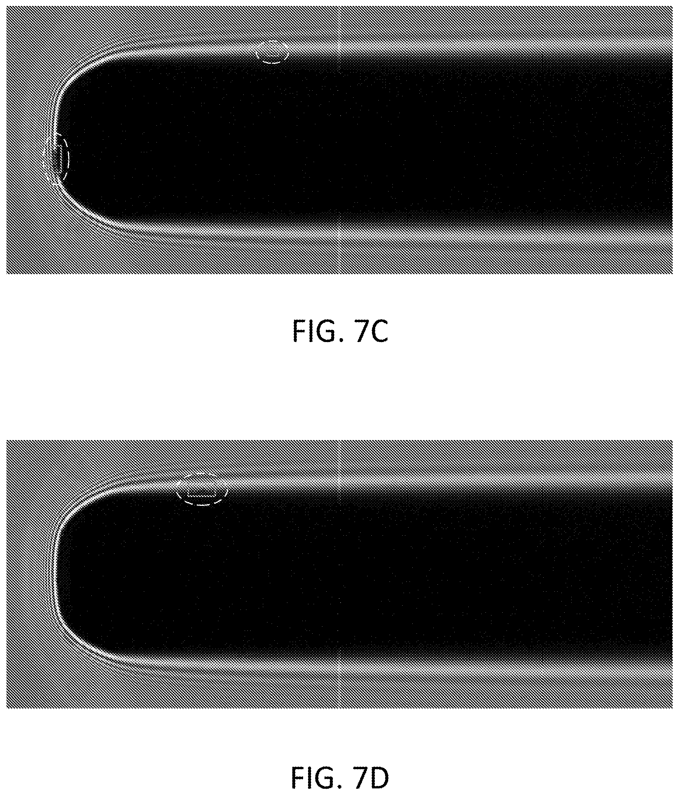

FIGS. 7A-7D show examples of delamination detection using embodiments disclosed herein. The defects are highlighted in boxes inside the dashed-line ovals. Embodiments disclosed herein can eliminate the need for manual review of all sites and can allow semiconductor manufacturers to locate the defective sites automatically. The defect-free reference edge profile can be generated from a potentially defective image, which can provide improved results because the images are related. This avoids use of a potentially dissimilar reference image, avoiding errors. Moreover, the sensitivity is increased compared to manual review. Semiconductor manufacturers can receive information about the defect size and location on the wafer edge.

In an embodiment, a reference can be determined from a local median (of neighboring sites) or a global median (of all sites) instead of generating a profile-guided reference image per site. A reference image can be generated by aligning all the profiler images and taking a median out of it. This can be used when there is no profile variation across sites within the wafer.

In another embodiment, fuzzy k-means clustering is used followed by dynamic threshold for detection of weak defects. Instead of using a fixed threshold on the difference image, the statistics of the intensity distribution can be analyzed to dynamically determine a threshold value.

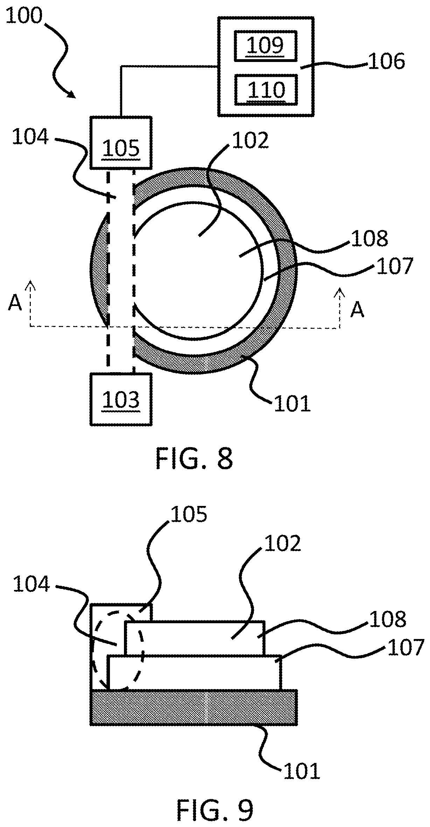

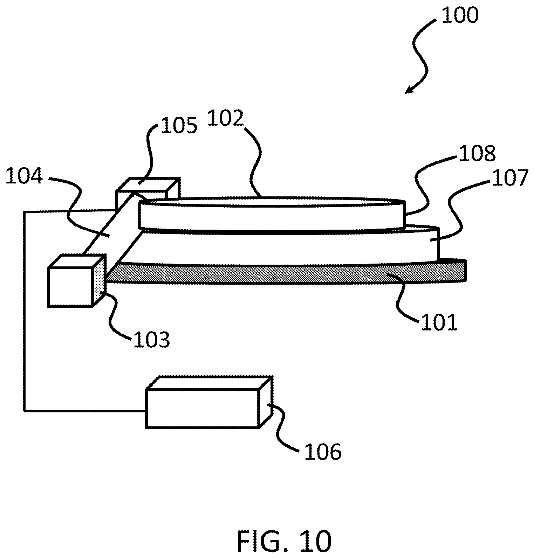

FIGS. 8 and 9 are a top view and corresponding cross-sectional side view along A-A of a block diagram of a system 100. FIG. 10 is a perspective view of a system 100 corresponding to the embodiment of FIGS. 8 and 9. System 100 is configured to perform metrology of a bonded wafer by acquiring images that are shadowgrams. A shadowgram applies a shadowgraph technique and visualizes or images a shadow of the bonded wafer 102, such as a circumferential edge of the bonded wafer 102. A stage 101 can be configured to rotate a bonded wafer 102, though the system 100 also can rotate with respect to the bonded wafer 102. Such rotation can be stepped or continuous. The bonded wafer 102 also may not rotate during imaging and components of the system 100 may be fixed.

The exemplary bonded wafer 102 is shown with a carrier wafer 107 and a top wafer 108. The carrier wafer 107 and top wafer 108 may have different diameters, such as those illustrated in FIG. 1. For example, the carrier wafer 107 can be a carrier wafer and the top wafer 108 can be a device wafer. Alternatively, the carrier wafer 107 and top wafer 108 can both be device wafers or more than the carrier wafer 107 and top wafer 108 can form the bonded wafer 102.

A light source 103 is configured to direct collimated light 104 at an edge of the bonded wafer 102. In some embodiments, the collimated light 104 is directed tangentially, with respect to the bonded wafer 102, so as to create a shadow of the edge profile. Thus, the bonded wafer 102 blocks some of the collimated light 104. The collimated light 104 is illustrated as approximately circular, but can be other shapes. In an exemplary embodiment, the light source 103 utilizes a light-emitting diode (LED). Other suitable light sources 103, such as a lamp that produces collimated light, laser, supercontinuum laser, laser-driven phosphor, or laser-driven lamp, will be apparent in light of the present disclosure. Combinations of light sources 103, such as a laser and an LED, may be utilized. The light source 103 can include both single band and broadband light sources in a single system or multiple systems. The collimated light 104 may be parallel to a plane of the bonded wafer 102. For example, the collimated light 104 may be parallel to the plane of the carrier wafer 107 on which the top wafer 108 is disposed. Diffraction suppression techniques may be used to remove diffraction-related artifacts that may adversely affect measurements. Approximately a few millimeters of the bonded wafer 102 are seen in a profile using the collimated light 104, though other dimensions are possible.

A detector 105 located apart from the light source 103 receives at least some of the collimated light 104. The detector 105 is located such that when a bonded wafer 102 is being imaged, at least a portion of the shadow (i.e., the light producing the shadow) is received by the detector 105. The detector 105 can be, for example, a charge-coupled device (CCD) or complementary metal-oxide-semiconductor (CMOS) camera. In this way, an image of the wafer edge silhouette is formed (i.e., a wafer edge profile image). The detector 105 can be configured to collect hundreds of wafer edge profile images of the bonded wafer 102 for high sampling. For example, between 2 and 500 wafer edge profile image of the bonded wafer 102 may be collected, though more images can be collected. In an example, 16 wafer edge profile images of a bonded wafer are collected. In another example, 36 wafer edge profile images of a bonded wafer are collected. In another example, 360 wafer edge profile images of a bonded wafer are collected.

The collimated light 104 may have a wavelength or wavelengths that produce a shadow. For example, visible light such as blue light or white light may be used. Other suitable collimated light 104 will be apparent in light of the present disclosure. For example, ultraviolet light can be used. The collimated light 104 may be polarized and may be pulsed or continuous.

While only a single light source 103 and detector 105 are illustrated in FIGS. 8-10, multiple light sources 103 and detectors 105 may be used. Multiple light sources 103 and detectors 105 may be placed at various locations around the perimeter of the bonded wafer 102 to collect images at different locations of the bonded wafer 102. This may increase inspection throughput or increase the number of images produced while minimizing the impact to inspection throughput. If multiple light sources 103 and detectors 105 are placed at various locations around the perimeter of the bonded wafer 102, then the bonded wafer 102 may not rotate with respect to the light source 103 or detector 105.

A controller 106 is operatively connected to the detector 105. The controller 106 is configured to analyze an image of the edge of the bonded wafer 102 and can control the acquisition of the images using the detector 105. For example, the controller 106 can rotate the bonded wafer 102 with respect to the light source 103 or detector 105. The controller 106 also can control the timing or locations of image acquisition on the bonded wafer 102. The controller 106 may be configured to perform other functions or additional steps using the output of the detector 105. For example, the controller 106 may be programmed to perform some or all of the steps of FIG. 1. The controller 106 can include a processor 109 and a memory 110.

The controller 106, other system(s), or other subsystem(s) described herein may take various forms, including a personal computer system, workstation, image computer, mainframe computer system, workstation, network appliance, internet appliance, parallel processor, or other device. In general, the term "controller" may be broadly defined to encompass any device having one or more processors that executes instructions from a memory medium. The subsystem(s) or system(s) may also include any suitable processor known in the art, such as a parallel processor. In addition, the subsystem(s) or system(s) may include a platform with high speed processing and software, either as a standalone or a networked tool.

If the system includes more than one subsystem, then the different subsystems may be coupled to each other such that images, data, information, instructions, etc. can be sent between the subsystems. For example, one subsystem may be coupled to additional subsystem(s) by any suitable transmission media, which may include any suitable wired and/or wireless transmission media known in the art. Two or more of such subsystems may also be effectively coupled by a shared computer-readable storage medium (not shown).

In another embodiment, the controller 106 may be communicatively coupled to any of the various components or sub-systems of system 100 in any manner known in the art. Moreover, the controller 106 may be configured to receive and/or acquire data or information from other systems by a transmission medium that may include wireline and/or wireless portions. In this manner, the transmission medium may serve as a data link between the controller 106 and other subsystems of the system 100 or systems external to system 100.

An additional embodiment relates to a non-transitory computer-readable medium storing program instructions executable on a controller for performing a computer-implemented method for bonded wafer metrology, such as for performing the techniques disclosed herein. In particular, as shown in FIG. 8, the controller 106 can include a memory 110 or other electronic data storage medium with non-transitory computer-readable medium that includes program instructions executable on the controller 106. The computer-implemented method may include any step(s) of any method(s) described herein, such as that disclosed with respect to FIG. 1. The memory 110 or other electronic data storage medium may be a storage medium such as a read-only memory, a random access memory, a magnetic or optical disk, a non-volatile memory, a solid state memory, a magnetic tape, or any other suitable non-transitory computer-readable medium known in the art.

The program instructions may be implemented in any of various ways, including procedure-based techniques, component-based techniques, and/or object-oriented techniques, among others. For example, the program instructions may be implemented using ActiveX controls, C++ objects, JavaBeans, Microsoft Foundation Classes (MFC), SSE (Streaming SIMD Extension), or other technologies or methodologies, as desired.

In some embodiments, various steps, functions, and/or operations of system 100 and the methods disclosed herein are carried out by one or more of the following: electronic circuits, logic gates, multiplexers, programmable logic devices, application-specific integrated circuits (ASICs), analog or digital controls/switches, microcontrollers, or computing systems. Program instructions implementing methods such as those described herein may be transmitted over or stored on carrier medium. A carrier medium may include an electronic data storage medium, such as that of the memory 110, or a transmission medium such as a wire, cable, or wireless transmission link. For instance, the various steps described throughout the present disclosure may be carried out by a single controller 106 (or computer system) or, alternatively, multiple controllers 106 (or multiple computer systems). Moreover, different sub-systems of the system 100 may include one or more computing or logic systems. Therefore, the above description should not be interpreted as a limitation on the present invention but merely an illustration.

As used herein, the term "wafer" generally refers to substrates formed of a semiconductor or non-semiconductor material. Examples of such a semiconductor or non-semiconductor material include, but are not limited to, monocrystalline silicon, gallium nitride, gallium arsenide, indium phosphide, sapphire, and glass. Such substrates may be commonly found and/or processed in semiconductor fabrication facilities.

A wafer may include one or more layers formed upon a substrate. For example, such layers may include, but are not limited to, a photoresist, a dielectric material, a conductive material, and a semiconductive material. Many different types of such layers are known in the art, and the term wafer as used herein is intended to encompass a wafer including all types of such layers.

One or more layers formed on a wafer may be patterned or unpatterned. For example, a wafer may include a plurality of dies, each having repeatable patterned features or periodic structures. Formation and processing of such layers of material may ultimately result in completed devices. Many different types of devices may be formed on a wafer, and the term wafer as used herein is intended to encompass a wafer on which any type of device known in the art is being fabricated.

Other types of wafers also may be used. For example, the wafer may be used to manufacture LEDs, solar cells, magnetic discs, flat panels, or polished plates. Defects on other objects also may be classified using techniques and systems disclosed herein.

Each of the steps of the method may be performed as described herein. The methods also may include any other step(s) that can be performed by the controller and/or computer subsystem(s) or system(s) described herein. The steps can be performed by one or more computer systems, which may be configured according to any of the embodiments described herein. In addition, the methods described above may be performed by any of the system embodiments described herein.

Although the present disclosure has been described with respect to one or more particular embodiments, it will be understood that other embodiments of the present disclosure may be made without departing from the scope of the present disclosure. Hence, the present disclosure is deemed limited only by the appended claims and the reasonable interpretation thereof.

## Claims

1. A computer-implemented method (50) for inspecting edge profiles of a semiconductor wafer, the method comprising:
receiving a profile image (51) of an edge of a semiconductor wafer at a processor;
estimating a reference image (52) from the profile image using the processor, wherein the estimating includes:
determining a defect-free profile edge; and
generating the reference image using the defect-free profile edge;
determining a difference image (53) between the reference image and the profile image using the processor;
binarizing the difference image (54) using the processor; and
inspecting the difference image (55) for defects using the processor after the binarizing;
wherein determining the defect-free profile edge includes:
binarizing the profile image;
removing fringes from the profile image;
extracting edges of the profile image after the binarizing and the removing fringes to generate an edge image; and
removing defects in the edge image;
wherein removing the defects in the edge image includes:
receiving the edge image;
estimating an edge in the edge image using a piecewise polynomial fit thereby generating an estimated edge image; and
removing mismatched points between the edge image and the estimated edge image thereby generating the defect-free profile edge.

2. The method of claim 1, wherein estimating the edge and removing the mismatched points are repeated.

3. The method of claim 1, wherein generating the reference image includes:
receiving the defect-free profile edge;
applying a distance transform to the defect-free profile edge thereby generating a distance transform image;
extracting pixels from the profile image that are a distance beyond an edge of the distance transform image thereby generating an extracted track; and
applying a one-dimensional average filter on the extracted track.

4. The method of claim 3, wherein extracting the pixels and applying the one-dimensional average filter is repeated until the distance is less than a threshold.

5. The method of claim 1, wherein the estimating occurs on-the-fly; or
wherein the method further comprising preprocessing the profile image using the processor before estimating the reference image, and wherein the preprocessing includes flipping the profile image.

6. A non-transitory computer readable medium storing a program configured to instruct a processor to execute the method of claim 1.

7. A system (100) for inspection of edge profiles of a semiconductor wafer, the system comprising:
a stage (101) configured to support a wafer (102);
an imaging system configured to generate a profile image of a circumferential edge of the wafer, wherein the imaging system includes a light source (103) configured to generate collimated light (104) and a detector (105) configured to generate the profile image; and
a processor (109) in electronic communication with the imaging system, wherein the processor is configured to:
receive a profile image (51) of an edge of semiconductor wafer;
estimate a reference image (52_ from the profile image, wherein the estimating includes:
determining a defect-free profile edge; and
generating the reference image using the defect-free profile edge;
determine a difference image (53) between the reference image and the profile image;
binarize the difference image (54); and
inspect the difference image (55) for defects after the binarizing;
wherein determining the defect-free profile edge includes:
binarizing the profile image;
removing fringes from the profile image;
extracting edges of the profile image after the binarizing and the removing fringes to generate an edge image; and
removing defects in the edge image;
wherein removing the defects in the edge image includes:
receiving the edge image;
estimating an edge in the edge image using a piecewise polynomial fit thereby generating an estimated edge image; and
removing mismatched points between the edge image and the estimated edge image thereby generating the defect-free profile edge.

8. The system of claim 7, wherein estimating the edge and removing the mismatched points is repeated.

9. The system of claim 7, wherein generating the reference image includes:
receiving the defect-free profile edge;
applying a distance transform to the defect-free profile edge thereby generating a distance transform image;
extracting pixels from the profile image that are a distance beyond an edge of the distance transform image thereby generating an extracted track; and
applying a one-dimensional average filter on the extracted track.

10. The system of claim 9, wherein extracting the pixels and applying the one-dimensional average filter is repeated until the distance is less than a threshold.

11. The system of claim 7, wherein the processor is further configured to preprocess the profile image before estimating the reference image, and wherein the preprocessing includes flipping the profile image.

## Patentansprüche

1. Computerimplementiertes Verfahren (50) zum Inspizieren von Kantenprofilen eines Halbleiterwafers, wobei das Verfahren Folgendes umfasst:
Empfangen eines Profilbildes (51) einer Kante eines Halbleiterwafers an einem Prozessor;
Schätzen eines Referenzbildes (52) aus dem Profilbild mithilfe des Prozessors, wobei das Schätzen Folgendes einschließt:
Bestimmen einer fehlerfreien Profilkante; und
Erzeugen des Referenzbildes mithilfe der fehlerfreien Profilkante;
Bestimmen eines Differenzbildes (53) zwischen dem Referenzbild und dem Profilbild mithilfe des Prozessors;
Binarisieren des Differenzbildes (54) mithilfe des Prozessors; und
Inspizieren des Differenzbildes (55) auf Fehler mithilfe des Prozessors nach dem Binarisieren;
wobei das Bestimmen der fehlerfreien Profilkante Folgendes einschließt:
Binarisieren des Profilbildes;
Entfernen der Streifen aus dem Profilbild;
Extrahieren der Kanten des Profilbildes nach dem Binarisieren und dem Entfernen der Streifen, um ein Kantenbild zu erzeugen; und
Entfernen der Fehler in dem Kantenbild;
wobei das Entfernen der Fehler in dem Kantenbild Folgendes einschließt:
Empfangen des Kantenbildes;
Schätzen einer Kante in dem Kantenbild mithilfe einer stückweisen polynomialen Anpassung, wodurch ein geschätztes Kantenbild erzeugt wird; und
Entfernen nicht übereinstimmender Punkte zwischen dem Kantenbild und dem geschätzten Kantenbild, wodurch die fehlerfreie Profilkante erzeugt wird.

2. Verfahren nach Anspruch 1, wobei das Schätzen der Kante und das Entfernen der nicht übereinstimmenden Punkte wiederholt werden.

3. Verfahren nach Anspruch 1, wobei das Erzeugen des Referenzbildes Folgendes einschließt:
Empfangen der fehlerfreien Profilkante;
Anwenden einer Distanztransformation auf die fehlerfreie Profilkante, wodurch ein Distanztransformationsbild erzeugt wird;
Extrahieren von Pixeln aus dem Profilbild, die eine Distanz jenseits einer Kante des Distanztransformationsbildes sind, wodurch eine extrahierte Spur erzeugt wird; und
Anwenden eines eindimensionalen Mittelwertfilters auf der extrahierten Spur.

4. Verfahren nach Anspruch 3, wobei das Extrahieren der Pixel und das Anwenden des eindimensionalen Mittelwertfilters wiederholt wird, bis die Distanz weniger als ein Schwellenwert ist.

5. Verfahren nach Anspruch 1, wobei das Schätzen spontan erfolgt; oder
wobei das Verfahren ferner ein Vorverarbeiten des Profilbildes mithilfe des Prozessors vor dem Schätzen des Referenzbildes umfasst, und wobei das Vorverarbeiten das Umdrehen des Profilbildes einschließt.

6. Nichtflüchtiges computerlesbares Medium, das ein Programm speichert, das dazu konfiguriert ist, einen Prozessor anzuweisen, das Verfahrens nach Anspruch 1 auszuführen.

7. System (100) zur Inspektion von Kantenprofilen eines Halbleiterwafers, wobei das System Folgendes umfasst:
einen Tisch (101), der zum Tragen eines Wafers (102) konfiguriert ist;
ein Bildgebungssystem, das dazu konfiguriert ist, ein Profilbild einer Umfangskante des Wafers zu erzeugen, wobei das Bildgebungssystem eine Lichtquelle (103) einschließt, die dazu konfiguriert ist, kollimiertes Licht (104) zu erzeugen, und einen Detektor (105), der dazu konfiguriert ist, das Profilbild zu erzeugen; und
einen Prozessor (109) in elektronischer Kommunikation mit dem Bildgebungssystem, wobei der Prozessor zu Folgendem konfiguriert ist:
Empfangen eines Profilbildes (51) einer Kante des Halbleiterwafers;
Schätzen eines Referenzbildes (52) aus dem Profilbild, wobei das Schätzen Folgendes einschließt:
Bestimmen einer fehlerfreien Profilkante; und
Erzeugen des Referenzbildes mithilfe der fehlerfreien Profilkante;
Bestimmen eines Differenzbildes (53) zwischen dem Referenzbild und dem Profilbild;
Binarisieren des Differenzbildes (54); und
Inspizieren des Differenzbildes (55) auf Fehler nach dem Binarisieren;
wobei das Bestimmen der fehlerfreien Profilkante Folgendes einschließt:
Binarisieren des Profilbildes;
Entfernen der Streifen aus dem Profilbild;
Extrahieren der Kanten des Profilbildes nach dem Binarisieren und dem Entfernen der Streifen, um ein Kantenbild zu erzeugen; und
Entfernen der Fehler in dem Kantenbild;
wobei das Entfernen der Fehler in dem Kantenbild Folgendes einschließt:
Empfangen des Kantenbildes;
Schätzen einer Kante in dem Kantenbild mithilfe einer stückweisen polynomialen Anpassung, wodurch ein geschätztes Kantenbild erzeugt wird; und
Entfernen nicht übereinstimmender Punkte zwischen dem Kantenbild und dem geschätzten Kantenbild, wodurch die fehlerfreie Profilkante erzeugt wird.

8. System nach Anspruch 7, wobei das Schätzen der Kante und das Entfernen der nicht übereinstimmenden Punkte wiederholt wird.

9. System nach Anspruch 7, wobei das Erzeugen des Referenzbildes Folgendes einschließt:
Empfangen der fehlerfreien Profilkante;
Anwenden einer Distanztransformation auf die fehlerfreie Profilkante, wodurch ein Distanztransformationsbild erzeugt wird;
Extrahieren von Pixeln aus dem Profilbild, die eine Distanz jenseits einer Kante des Distanztransformationsbildes sind, wodurch eine extrahierte Spur erzeugt wird; und
Anwenden eines eindimensionalen Mittelwertfilters auf der extrahierten Spur.

10. System nach Anspruch 9, wobei das Extrahieren der Pixel und das Anwenden des eindimensionalen Mittelwertfilters wiederholt wird, bis die Distanz weniger als ein Schwellenwert ist.

11. System nach Anspruch 7, wobei der Prozessor ferner dazu konfiguriert ist, das Profilbild vor dem Schätzen des Referenzbildes vorzuverarbeiten, und wobei das Vorverarbeiten das Umdrehen des Profilbildes einschließt.

## Revendications

1. Procédé mis en œuvre par ordinateur (50) d'inspection de profils de bord d'une plaquette de semi-conducteur, le procédé comprenant :
la réception d'une image de profil (51) d'un bord d'une plaquette de semi-conducteur au niveau d'un processeur ;
l'estimation d'une image de référence (52) à partir de l'image de profil à l'aide du processeur, dans lequel l'estimation comporte :
la détermination d'un bord de profil sans défaut ; et
la génération de l'image de référence à l'aide du bord de profil sans défaut ;
la détermination d'une image de différence (53) entre l'image de référence et l'image de profil à l'aide du processeur ;
la binarisation de l'image de différence (54) à l'aide du processeur ; et
l'inspection de l'image de différence (55) pour détecter des défauts à l'aide du processeur après la binarisation ;
dans lequel la détermination du bord de profil sans défaut comporte :
la binarisation de l'image de profil ;
la suppression de franges de l'image de profil ;
l'extraction de bords de l'image de profil après binarisation et la suppression de franges pour générer une image de bord ; et
la suppression de défauts dans l'image de bord ;
dans lequel la suppression des défauts dans l'image de bord comporte :
la réception de l'image de bord ;
l'estimation d'un bord dans l'image de bord à l'aide d'un ajustement polynomial par morceaux, générant ainsi une image de bord estimée ; et
la suppression de points non-concordants entre l'image de bord et l'image de bord estimée, générant ainsi un bord de profil sans défaut.

2. Procédé selon la revendication 1, dans lequel l'estimation du bord et la suppression des points non concordants sont répétées.

3. Procédé selon la revendication 1, dans lequel la génération de l'image de référence comporte :
la réception du bord de profil sans défaut ;
l'application d'une transformation de distance au bord du profil sans défaut, générant ainsi une image de transformation de distance ;
l'extraction, de l'image de profil, de pixels situés à une certaine distance au-delà du bord de l'image de transformation de distance, générant ainsi une piste extraite ; et
l'application d'un filtre de moyenne unidimensionnelle sur la piste extraite.

4. Procédé selon la revendication 3, dans lequel l'extraction des pixels et l'application du filtre de moyenne unidimensionnelle sont répétées jusqu'à ce que la distance soit inférieure à un seuil.

5. Procédé selon la revendication 1, dans lequel l'estimation est effectuée en temps réel ; ou
dans lequel le procédé comprend en outre le prétraitement de l'image de profil à l'aide du processeur avant l'estimation de l'image de référence, et dans lequel le prétraitement comporte le retournement de l'image de profil.

6. Support non transitoire lisible par ordinateur stockant un programme configuré pour ordonner à un processeur d'exécuter le procédé selon la revendication 1.

7. Système (100) d'inspection de profils de bord d'une plaquette de semi-conducteur, le système comprenant :
une platine (101) configurée pour supporter une plaquette (102) ;
un système d'imagerie configuré pour générer une image de profil d'un bord circonférentiel de la plaquette, dans lequel le système d'imagerie comporte une source lumineuse (103) configurée pour générer une lumière collimatée (104) et un détecteur (105) configuré pour générer l'image de profil ; et
un processeur (109) en communication électronique avec le système d'imagerie, dans lequel le processeur est configuré pour :
recevoir une image de profil (51) d'un bord de plaquette de semi-conducteur ;
estimer une image de référence (52_ à partir de l'image de profil, dans lequel l'estimation comporte :
la détermination d'un bord de profil sans défaut ; et
la génération de l'image de référence à l'aide du bord de profil sans défaut ;
déterminer une image de différence (53) entre l'image de référence et l'image de profil ;
binariser l'image de différence (54) ; et
inspecter l'image de différence (55) pour détecter des défauts après la binarisation ;
dans lequel la détermination du bord de profil sans défaut comporte :
la binarisation de l'image de profil ;
la suppression de franges de l'image de profil ;
l'extraction de bords de l'image de profil après binarisation et la suppression de franges pour générer une image de bord ; et
la suppression de défauts dans l'image de bord ;
dans lequel la suppression des défauts dans l'image de bord comporte :
la réception de l'image de bord ;
l'estimation d'un bord dans l'image de bord à l'aide d'un ajustement polynomial par morceaux, générant ainsi une image de bord estimée ; et
la suppression de points non-concordants entre l'image de bord et l'image de bord estimée, générant ainsi un bord de profil sans défaut.

8. Système selon la revendication 7, dans lequel l'estimation du bord et la suppression des points non concordants sont répétées.

9. Système selon la revendication 7, dans lequel la génération de l'image de référence comporte :
la réception du bord de profil sans défaut ;
l'application d'une transformation de distance au bord du profil sans défaut, générant ainsi une image de transformation de distance ;
l'extraction, de l'image de profil, de pixels situés à une certaine distance au-delà du bord de l'image de transformation de distance, générant ainsi une piste extraite ; et
l'application d'un filtre de moyenne unidimensionnelle sur la piste extraite.

10. Système selon la revendication 9, dans lequel l'extraction des pixels et l'application du filtre de moyenne unidimensionnelle sont répétées jusqu'à ce que la distance soit inférieure à un seuil.

11. Système selon la revendication 7, dans lequel le processeur est en outre configuré pour prétraiter l'image de profil avant d'estimer l'image de référence, et dans lequel le prétraitement comporte le retournement de l'image de profil.
